# EUROPÄISCHE PATENTSCHRIFT

(11) **EP 1 916 090 B1**
(45) Veröffentlichungstag und Bekanntmachung des Hinweises auf die Patenterteilung: **18.11.2009**
(21) Anmeldenummer: 07118945.0
(22) Anmeldetag: 22.10.2007
(51) Int. Cl.: B29C 53/04, B29C 53/84

(54) **Verfahren zur Herstellung von Kunststoffbauteilen**
Method for manufacturing plastic parts
Procédé de fabrication de composants en matière synthétique

(30) Priorität: 25.10.2006 AT 18062006
(43) Veröffentlichungstag der Anmeldung: 30.04.2008
(73) Patentinhaber: Protex Plastics GmbH, 5700 Zell am See (AT)
(72) Erfinder: Plöbst, Dietmar, 5710 Kaprun (AT); Lidicky, Hans, 6351 Scheffau (AT)
(74) Vertreter: Babeluk, Michael

(56) Entgegenhaltungen:
- DE-C1- 19 630 227
- JP-A- 7 195 509
- US-A- 3 229 489

## Beschreibung

Die Erfindung betrifft ein Verfahren zur Herstellung von Kunststoffbauteilen aus Kunststoffrohteilen, insbesondere von ein- oder mehrschichtigen Kunststoffplatten, mit folgenden Schritten:
- Bereitstellen eines Kunststoffrohteils;
- Erwärmen des Kunststoffrohteils in vorbestimmten Biegebereichen auf eine vorbestimmte Temperatur;
- Auflegen des Kunststoffrohteils auf zumindest eine gekrümmte Formfläche an einer Auflagestelle;
- Bewegen zumindest einer Anpresswalze entlang einer vorgegebenen Bahnkurve entlang des Kunststoffrohteils, um diese in einem Biegevorgang an die Formfläche zu pressen;
wobei der Kunststoffrohteil während des Erwärmens und/oder während des Biegevorganges fixiert wird.

Weiters betrifft die Erfindung eine Vorrichtung zur Herstellung von Kunststoffbauteilen, insbesondere von Kunststoffplatten, mit zumindest einer Heizeinrichtung zum Erwärmen des Kunststoffbauteils, mit zumindest einer Formfläche, die mindestens eine Auflagestelle aufweist, und mit zumindest einer Anpresswalze zum Andrücken des Kunststoffbauteils an die Formfläche, wobei die Anpresswalze frei drehbar auf einem beweglichen Träger gelagert ist.

Mehrschichtige Kunststoffplatten können aufgrund ihrer besonderen Eigenschaften und insbesondere wegen ihrer guten Wärmedämmung auf vielseitige Weise in der Technik eingesetzt werden. Eine Beschränkung für die Anwendung besteht bisher jedoch darin, dass Bauteile mit gekrümmten Oberflächen nur schwer in adäquater Weise herstellbar sind. Bei bekannten Verfahren zur Herstellung solcher Kunststoffbauteile wird die Kunststoffplatte auf eine weibliche Formhälfte aufgelegt und von einer männlichen Formhälfte in die Hohlräume gedrückt. Während dieses Herstellungsvorganges kommt es jedoch örtlich zu hohen Spannungen, die zu Mikrorissen im Bauteil führen, so dass eine optisch ansprechend Form und hohe Qualität nicht mehr erreicht werden kann.

Insbesondere sind Kunststoffplatten, die als Materialverbund unterschiedlicher Thermoplaste bestehen, schwer in formgebenden Verfahren bearbeitbar.

Aus der DD 276 651 A1 ist ein Verfahren und eine Vorrichtung zum Biegen von profilierten Platten aus thermoplastischem Material bekannt. Die Platte wird dabei zwischen eine auf beliebige Biegeradien einstellbare ortsfest angeordnete und eine frei bewegliche Schablone mit gleicher Profilierung gebracht und im Biegebereich auf Erweichungstemperatur erwärmt. Die frei bewegliche Schablone wird ausgehend von dem mit der ortsfesten Schablone im Eingriff stehenden Ende über den Biegebereich fortlaufend an die ortsfeste Schablone angedrückt, bis der gewünschte Biegewinkel erreicht ist und bis zum Erkalten der Platte mit ihr im Formschluss gehalten. Das Andrücken der beweglichen Schablone erfolgt mit einer in einer Führung laufenden Druckrolle, deren Antrieb durch das Ausschwenken der zwischen die Schablonen Heizeinrichtung betätigt wird.

Aus der EP 0 141 604 A2 ist ein Verfahren zur Herstellung verstärkter thermoplastischer Verbundbauteile bekannt, wobei eine Kunststoffplatte über dem Erweichungspunkt erwärmt wird und durch Anpresswalzen an ein Biegewerkzeug gepresst wird, wobei die Kunststoffplatte in die Form des Biegewerkzeuges gebogen wird.

Die JP 53-144976 A beschreibt ein Verfahren zum Biegen von Kunststoffiaminaten, wobei zum Biegen von kleinen Radien das Laminat über bewegbare Anpresswalzen an ein Biegewerkzeug gepresst wird.

Die EP 0 392 047 A1 offenbart ein Verfahren und eine Vorrichtung zum Heißformen einer Kunstharz-Schichtpressstoffplatte, wobei während des gesamten Biegevorganges nicht nur der eigentliche Biegedruck auf den abzubiegenden Plattenrandbereich aufgebracht wird, sondern während des Aufbringens dieses Biegedruckes gleichzeitig ein Zug auf die verschiedenen Laminatschichten in Richtung des freien Plattenrandes ausgeübt wird.

In der GB 996 025 A und der JP 07-195509 A werden ebenfalls Verfahren und Vorrichtungen zum Heißformen von Kunstharz-Schichtpressstoffplatten beschrieben. Die JP 07-195509 A zielt dabei auf ein Tiefziehverfahren und nicht auf ein Biegeverfahren ab. Bei dieser Anlage wird die gesamte Platte erwärmt und danach über eine Form gezogen.

Die bekannten Vorrichtungen dienen nur zum Umformen von laminierten Platten und nicht zur Formgebung von Thermoplasten. In keiner der in den Veröffentlichungen gezeigten Aufbauten gibt es die Möglichkeit, hinterschnittige Teile zu fertigen, da dafür zumindest zwei Biegezonen vorhanden sein müssten.

Die JP 07-195509 A offenbart eine Vorrichtung zum thermischen Verformen von Kunststoffplatten mit einer eine Auflagestelle aufweisenden Formfläche, sowie mit zwei Anpresswalzen, welche den Kunststoffrohteil an die Formfläche andrücken, wobei die Anpresswalze drehbar auf einem beweglichen Träger gelagert ist.

Aus der DE 196 30 227 C1 ist eine Vorrichtung zum Ab- bzw. Umkanten von Kunststoffplatten bekannt. Eine Kunststoffplatte wird dabei auf einen mehrteiligen, beheizten Tisch aufgelegt und so zentriert, dass die Kunststoffplatte sich über die Breite eines starren Tischbalkens und sich mit ihren seitlichen Enden auf schwenkbare Seitenteile des Tisches erstreckt. Oberhalb des Tisches ist ein beheizter Mittelbalken angeordnet, welcher zum Festklemmen der Kunststoffplatte abwärts auf den Tisch verfahren wird. Die Biegezonen der Kunststoffplatte werden mit Heizdrähten auf eine materialspeziftsche Temperatur erwärmt, bei der eine plastische Verformung vollzogen werden kann. Die beheizbaren Elemente der Vorrichtung, nämlich des Tisches mit seinem Tischbalken und von Seitenteilen sowie des Mittelbalkens, bestehen aus Hohlprofilen. Die inneren Hohlräume der Elemente sind dabei zum Erhitzen derselben mit einem flüssigen Wärmeträger, wie beispielsweise Wasser, Öl oder dergleichen gefüllt, das in einem ständigen Heizkreislauf geführt und thermostatisch geregelt ist.

Die bekannten Verfahren haben weiters den Nachteil, dass nur eine mindere Oberflächenqualität des gebogenen Kunststoffteiles erreicht werden kann, da es beim Erwärmen und Biegen sehr leicht zu Oberflächenfehlern kommen kann.

Es ist die Aufgabe der Erfindung, diese Nachteile zu vermeiden und die Oberflächenqualität von durch Biegen verformten Kunststoffbauteilen zu verbessern.

Erfindungsgemäß wird dies dadurch erreicht, dass der Erwärmungsvorgang, der Biegevorgang und/oder der Abkühlvorgang temperaturgesteuert erfolgt, wobei vorzugsweise zumindest zwei Zonen des Biegebereiches unterschiedlich erwärmt und/oder abgekühlt werden, und dass der Kunststoffrohteil während des Erwärmens durch einen Niederhalter an einer Heizeinrichtung gehalten wird, wobei der erwärmte Kunststoffrohteil durch den Niederhalter zur Auflagestelle transportiert wird.

Dadurch, dass der Niederhalter zumindest einen Sauggreifer auf der dem Kunststoffbauteil zugewandten Seite aufweist, welcher über zumindest einem Vakuumkanal mit einem Saugluftanschluss verbunden ist, kann eine schonende Verfrachtung des Kunststoffbauteils zwischen der Heizeinrichtung und dem Biegewerkzeug realisiert werden.

Der Kunststoffbauteil wird während des Aufwärmvorganges im Bereich der Heizeinrichtung eingespannt und durch den Niederhalter an die Heizeinrichtung gedrückt, wobei nur im Biegebereich eine lokal sehr beschränkte Aufheizung des Kunststoffmaterials erfolgt.

Danach wird der Kunststoffbauteil oberflächenschonend durch Sauggreifer des Niederhalters zum Biegewerkzeug transportiert und durch die Anpresswalzen auf die vorbestimmte Form gebracht. Während des Biegevorganges wird der Kunststoffbauteil durch Unterdruck an die Oberfläche des Biegewerkzeuges gepresst, so dass Beschädigungen in Folge von Scherbewegung vermieden werden. Um Verformungseffekte zu Folge ungleichmäßiger Erwärmung oder Abkühlung während des Biegevorganges zu vermeiden, kann die Kunststoffplatte während des Biegevorganges lokal erwärmt oder abgekühlt werden.

Zum Lösen der gestellten Aufgabe ist der Kunststoffbauteil während des Erwärmens und/oder während des Biegevorganges durch ein Festhaltemittel fixierbar.

Besonders vorteilhaft ist es dabei, wenn der Kunststoffbauteil während des Erwärmens durch zumindest einen verfahrbaren, vorzugsweise balkenförmige Niederhalter fixierbar ist, wobei der Niederhalter den Kunststoffbauteil gegen eine vorzugsweise balkenförmige stillstehende Heizeinrichtung drückt, wobei vorzugsweise die Längsachse der Niederhalteeinheit und die Längsachse der Heizeinrichtung im Wesentlichen parallel zueinander und parallel zu einem definierten Biegebereich des Kunststoffbauteils angeordnet sind.

Zur genauen Temperatursteuerung ist es vorteilhaft, wenn die Niederhalteeinheit zumindest einen Kühlkanal aufweist.

Um eine lokal begrenzte Erwärmung des Kunststoffbauteils im Biegebereich oder in den Biegebereichen zu ermöglichen, ist vorgesehen, dass die Heizeinrichtung auf der dem Kunststoffbauteil zugewandten Seite eine Schlitzblende mit zumindest einem Schlitz zur Erwärmung des Biegebereiches des Kunststoffbauteils aufweist. Durch die Breite der Schlitze wird der Aufwärmbereich des Kunststoffbauteils definiert. Die Breite der Schlitze entspricht dabei im Wesentlichen der Breite des Biegebereichs plus zwei mal der Wandstärke.

Um zu verhindern, dass die Wärme über den Niederhalter abgeleitet wird, ist vorgesehen, dass der Niederhalter auf der dem Kunststoffbauteil zugewandten Seite eine Schlitzblende mit zumindest einer schlitzförmigen Öffnung oder Nut aufweist, wobei die schlitzförmige Öffnung oder Nut - während des Erwärmens des Kunststoffbauteils - gegenüber dem Schlitz der Heizeinrichtung angeordnet und wobei vorzugsweise die Breite der schlitzförmigen Öffnung oder Vertiefung der Breite des Schlitzes der Heizeinrichtung entspricht.

Eine selektive Erwärmung des Kunststoffbauteils kann erreicht werden, wenn die Heizeinrichtung - in Richtung der Längsachse der Heizeinrichtung betrachtet - zumindest zwei separat ansteuerbare Heizzonen aufweist. Dabei ist es zur genauen Temperatursteuerung vorteilhaft, wenn die Heizeinrichtung zumindest einen Kühlkanal aufweist.

Die Heizeinrichtung weist bevorzugt zumindest ein kontaktloses Heizelement auf, beispielsweise ein Keramik-Heizelement, einen Quarzstrahler oder einen Infrarotstrahler. Alternativ dazu ist auch die Verwendung von Kontaktheizungen möglich.

Besonders hohe Oberflächenqualität während des Biegevorganges kann erreicht werden, wenn zumindest ein die Formfläche ausbildendes Biegewerkzeug zumindest eine Heiz- und/oder Kühleinrichtung aufweist, wobei vorzugsweise das Biegewerkzeug zumindest zwei separat erwärm- oder abkühlbare Temperaturzonen aufweist.

Zum Fixieren des Kunststoffbauteils am Biegewerkzeug ist es vorteilhaft, wenn das Biegewerkzeug zumindest einen in der Formfläche mündenden Vakuumkanal aufweist, welcher mit einem Unterdruckanschluss verbindbar ist. Dadurch können Kratzer an der Oberfläche zu Folge von Scherbewegungen während des Biegevorganges wirksam vermieden werden.

Mehrere Biegewerkzeuge können zu einer Werkzeugeinheit zusammengefasst sein.

Eine exakte Formgebung lässt sich erreichen, wenn die Anpresswalzen durch ein mehrachsiges NC-Antriebssystem bewegbar sind. Antriebssystem samt Anpresswalzen und Werkzeugeinheit können dabei in einem Biegemodul angeordnet sein.

Mehrere Heinzeinrichtungen können nebeneinander in einem Heizmodul angeordnet sein. Dabei können auch mehrere Niederhalter in einer verfahrbaren Niederhaltereinheit angeordnet sein.

Die Erfindung wird im Folgenden anhand der Figuren näher erläutert. Es zeigen:
- Fig. 1: eine erfindungsgemäße Vorrichtung in einer Schrägansicht;
- Fig. 2: einen Biegemodul der Vorrichtung in einer Draufsicht;
- Fig. 3: den Biegemodul in einem Schnitt gemäß der Linie III-III in Fig. 2;
- Fig. 4: eine Heizeinrichtung in einer Schrägansicht;
- Fig. 5: die Heizeinrichtung im Detail in einem Schnitt gemäß der Linie V-V in Fig. 4;
- Fig. 6: eine Niederhalteeinheit in einer Schrägansicht;
- Fig. 7: die Niederhalteeinheit in einem Schnitt gemäß der Linie VII-VII in Fig. 6;
- Fig. 8: eine Werkzeugeinheit in einer Schrägansicht;
- Fig. 9: die Werkzeugeinheit in einem Schnitt gemäß der Linie IX-IX in Fig. 8;
- Fig. 10: das Detail X aus Fig. 9;
- Fig. 11: die Werkzeugeinheit in einer Draufsicht;
- Fig. 12: ein Biegewerkzeug in einer Ausführungsvariante in einer Schrägan-sicht;
- Fig. 13: dieses Biegewerkzeug in einer Draufsicht;
- Fig. 14: das Biegewerkzeug in einer Seitenansicht;
- Fig. 15: das Detail XV des Biegewerkzeuges aus Fig. 14; und
- Fig. 16: das Detail XVI des Biegewerkzeuges aus Fig. 13.

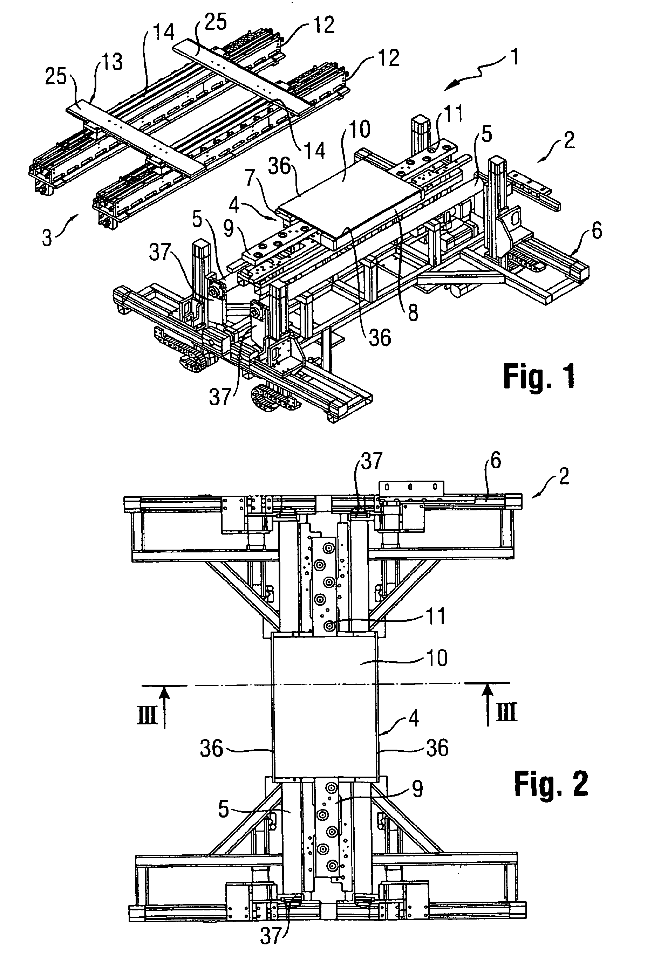

Fig. 1 zeigt eine Vorrichtung 1 zur Herstellung von durch Kunststoffplatten gebildeten Kunststoffbauteilen 10, welche Vorrichtung 1 ein Biegemodul 2 und ein Heizmodul 3 aufweist. Das Biegemodul 2 besteht aus einer Werkzeugeinheit 4, Anpresswalzen 5 und einem mehrachsigen Antriebssystem 6 für die Bewegung der Anpresswalzen 5 über die Träger 37.

Das Antriebssystem 6 weist ein horizontal in x-Richtung verfahrbares Achssystem 6a und ein vertikal in z-Richtung verfahrbares Achssystem 6b auf.

Zwischen den Biegewerkzeugen 7, 8 der Werkzeugeinheit 4 ist ein Auflagebalken 9 für den zu bearbeitenden Kunststoffbauteil 10 angeordnet. Der Auflagebalken 9 weist mit Vakuumkanälen verbundene Saugöffnungen 11 auf, über welche der Kunststoffbauteil 10 angesaugt und fixiert werden kann.

Das Aufheizmodul 3 besteht aus balkenförmigen Heizvorrichtungen 12, auf welchen der zu erwärmende Kunststoffbauteil 10 durch eine Niederhalteeinheit 13 mit balkenförmigen Niederhaltern 14 angepresst werden kann.

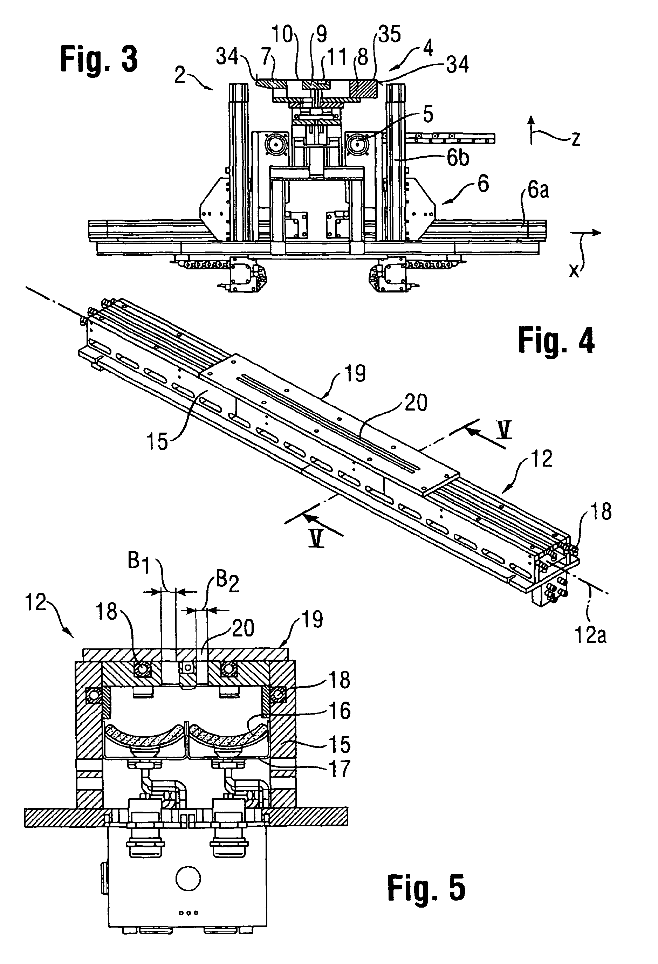

Die Heizvorrichtung 12 ist im Detail in den Fig. 4 und Fig. 5 gezeigt.

Die Heizeinrichtung 12 besteht aus einem Gehäuse 15, in welchem beispielsweise keramische Heizelemente 16 und gegebenenfalls Reflektoren 17 für die Heizelemente 16 angeordnet sind. In den Wänden des Gehäuses 15 sind Kühlkanäle 18 eines Kühlkreislaufes angeordnet. An der Oberseite des Gehäuses 15 ist eine Schlitzblende 19 mit einem oder mehreren Schlitzen 20 vorgesehen. Durch die Schlitzblende 19 wird eine lokal begrenzte Erwärmung des auf die Schlitzblende 19 aufgelegten Kunststoffbauteils 10 ermöglicht. Die Schlitze 20 definieren dabei die Biegebereiche 36 des Kunststoffbauteils 10.

Die Niederhalteeinheit 13 weist balkenförmige Niederhalter 14 auf, deren Längsachsen 14a parallel zu den Längsachsen 12a der Heizeinrichtung 12 angeordnet sind. Die Niederhalteeinheit 13 ist in vertikaler Richtung z und in horizontaler Richtung x verschiebbar und dient dazu, den Kunststoffbauteil 10 während des Aufheizvorganges an die Heizeinrichtung 12 zu drücken und zu fixieren. Dies gewährleistet eine lagegenaue Aufwärmung des Kunststoffbauteils 10 in den Biegebereichen. Jeder Niederhalter 14 weist an der der Heizeinrichtung 12 zugewandten Oberfläche 14b Nuten 33 auf, deren Breite b₁, b₂ den Schlitzbreiten B₁, B₂ der Schlitze 20 der Schlitzblende 19 der jeweiligen Heizeinrichtung 12 entspricht. Die Tiefe t der Nuten 33 ist dabei vorteilhafterweise größer als die Breite b₁, b₂ ausgebildet. Durch die Nuten 33 wird eine ungewünschte Ableitung der Wärme aus dem erhitzten Kunststoffbauteil 10 in den Niederhalter 14 vermieden.

Zur Temperierung jedes Niederhalters 14 sind in diesen Kühlkanälen 21 eines Kühlkreislaufes angeordnet. Jeder Niederhalter 14 ist weiters mit Sauggreifern 22 ausgestattet, welche über Vakuumkanäle 23 mit einem Saugluftanschluss 24 verbunden sind. Die Sauggreifer 22 ermöglichen es, den erhitzten Kunststoffbauteil 10 der Werkzeugeinheit 4 zuzuführen, um den Biegevorgang zu beginnen.

Im Ausführungsbeispiel weist das Aufheizmodul 3 zwei parallel zueinander im Abstand angeordnete Heizeinrichtungen 12 auf, um in einem Arbeitsschritt mehrere, im vorliegenden Fall vier, Biegebereiche gleichzeitig aufzuheizen. Die Niederhalteeinheit 13 weist in diesem Fall ebenfalls zwei Niederhalter 14 auf, deren Abstand dem der Heizeinrichtungen 12 entspricht. Die Niederhalter 14 sind über Balken 25 miteinander verbunden.

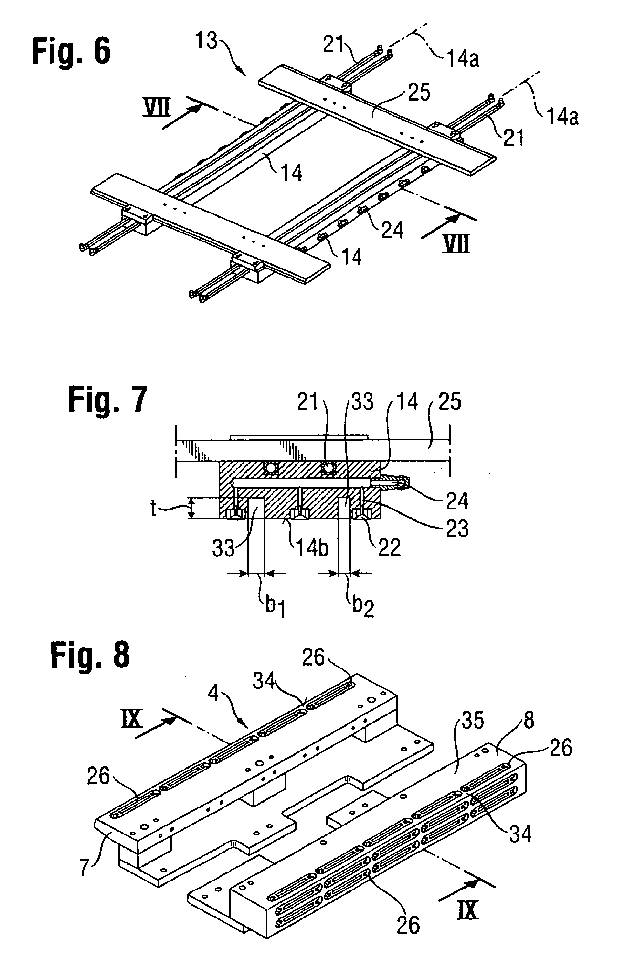

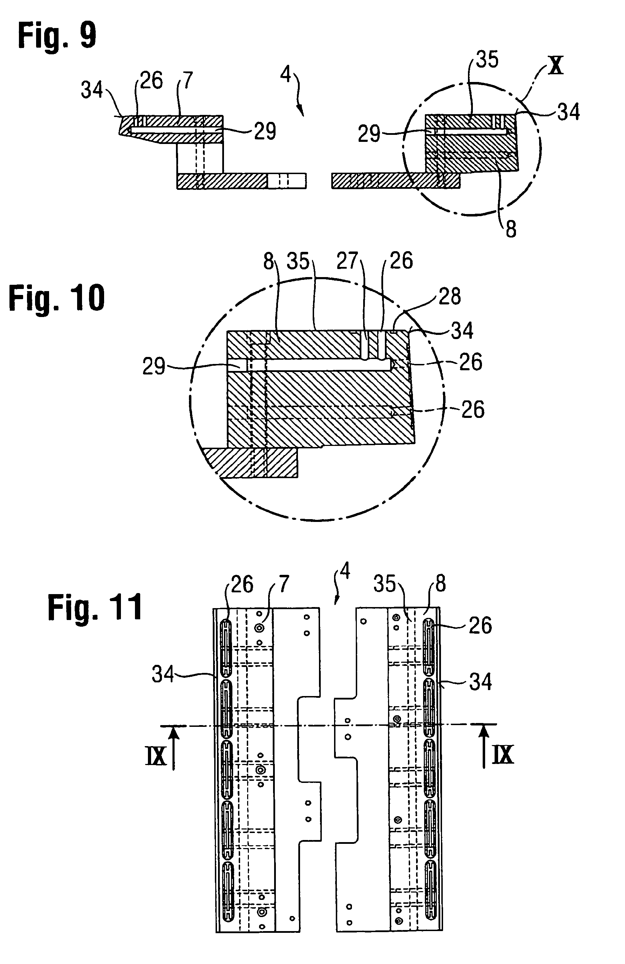

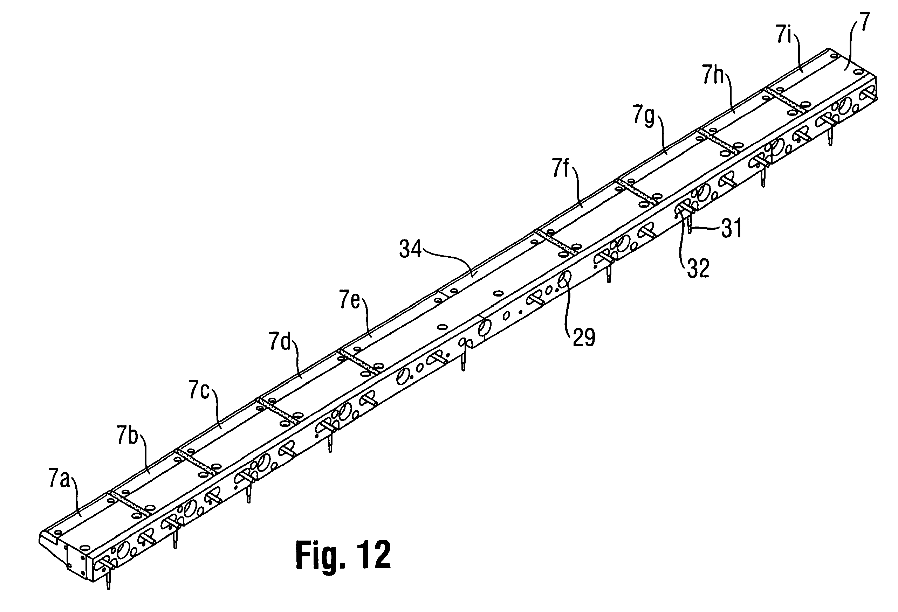

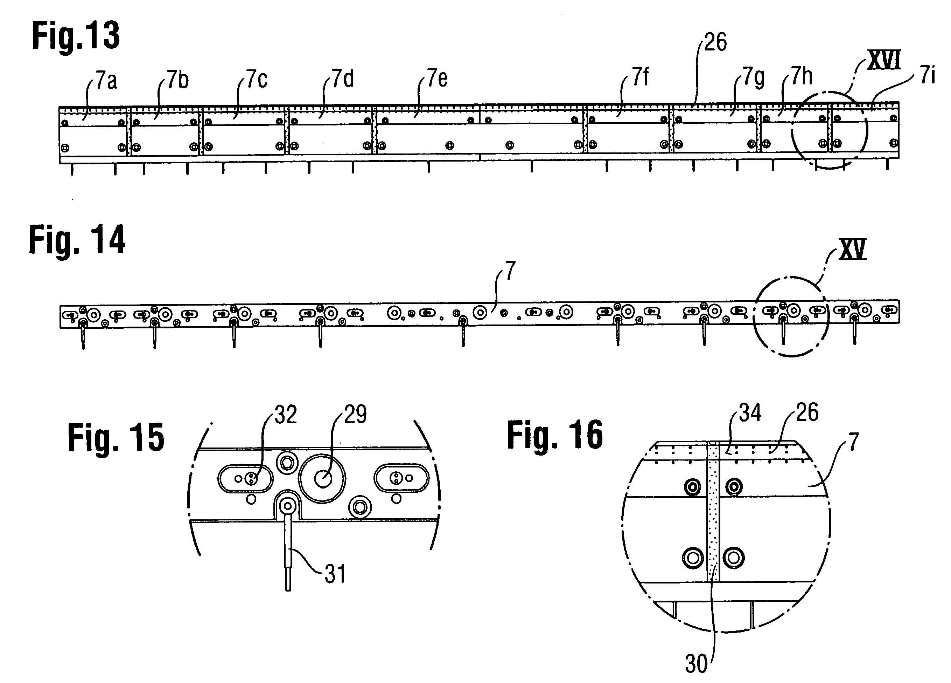

Die Werkzeugeinheit 4 besteht im Ausführungsbeispiel aus den Biegewerkzeugen 7, 8, wie in den Fig. 8 bis Fig. 11 dargestellt ist. Jedes Biegewerkzeug 7, 8 weist an der dem zu bearbeitenden Kunststoffbauteil 10 zugewandten Formfläche 34 Saugöffnungen 26 auf, die mit Vakuumkanälen 27 verbunden sind. Die Saugöffnungen 26 können - wie in Fig. 8 und Fig. 11 gezeigt - als langgestreckte Nuten, oder als Bohrungen ausgeführt sein (Fig. 12 und Fig. 16). Die Saugöffnungen 26 sind von Dichtungskanälen 28 zur Aufnahme von nicht weiter dargestellten Dichtungselementen umgeben. Die Vakuumkanäle 27 führen zu Unterdruckanschlüssen 29. Zum Entformen des Kunststoffbauteils 10 können die Biegewerkzeuge 7, 8 zueinander bewegt werden.

Besonders vorteilhaft ist es, wenn die Temperatur der Biegewerkzeuge 7, 8 geregelt werden kann. Bei dem in den Fig. 12 bis Fig. 16 dargestellten Ausführungsbeispiel ist das Biegewerkzeug 7 in einzelne Temperaturzonen 7a, 7b, 7c,... 7i unterteilt, wobei die Temperaturzonen 7a,... 7i durch Isolierplatten 30 voneinander thermisch getrennt sind. Jede Temperaturzonen 7a,... 7i weist einen Temperatursensor 31 und Anschlüsse 32 für Kühl- und/oder Heizeinrichtungen zur Temperierung der Temperaturzonen 7a,... 7i auf.

Das genau definierte Erwärmen der Biegebereiche 36 erfolgt durch die balkenförmigen Heizeinrichtungen 12, welche eingebaute sequentielle Heizelemente 16 aufweisen, welche einzelne Heizbereiche definieren. Jeder dieser Heizbereiche kann separat temperaturgeregelt werden, um dadurch einem späteren Verzug der Biegeteile entgegenzuwirken. Durch diesen Aufbau ist es möglich, über die gesamte Heizzone eine beliebige Temperaturverteilung zwischen dem Rand und der Mitte des Kunststoffbauteils 10 herzustellen. Der genau definierte Heizbereich wird entweder über den zum Biegeradius passenden Schlitz 20 der Schlitzblende 19 (bei kontaktlosen Heizungen) oder über eine genau konturierte Kontaktheizung auf eine materialspezifische Biegetemperatur gebracht. Typischerweise liegen die Heiztemperaturen am, beispielsweise durch eine Kunststoffplatte gebildeten Kunststoffbauteil 10 zwischen etwa 100°C und 220°C. Insbesondere bei Verwendung einer Kontaktheizung ist es vorteilhaft, wenn zusätzlich die Formfläche 34 des Biegewerkzeuges 7, 8 separat beheizt wird, wobei es besonders günstig ist, wenn in die Formfläche 34 verschiedene Temperaturzonen 7a,... 7i eingebracht wurden und somit dem Verzug längs des Biegebereiches 36 entgegenwirken.

Dadurch, dass der Kunststoffbauteil 10 während des Aufwärmvorganges mittels der Niederhalteeinheit 13 mit definierten Heizzonen auf die Heizeinrichtung 12 gedrückt wird, kann ein Wellen des Kunststoffbauteils 10 vermieden werden. Durch die Sauggreifer 22 können die Niederhalter 14 gleichzeitig als Greifvorrichtung verwendet werden und zum punktgenauen Transport der erwärmten Kunststoffplatte 10 auf die Auflagestelle 12 der Werkzeugeinheit 4 dienen. Die Heizeinrichtung 12 und die Niederhalter 14 werden außerdem durch eine Temperiervorrichtung stets auf einer genauen Prozesstemperatur gehalten und garantieren somit eine prozesssichere Herstellung des Kunststoffbauteils 10 mit minimiertem Ausschussanteil.

Die erwärmte Kunststoffplatte 10 wird durch die in den Niederhaltern 14 integrierten Sauggreifer 22 auf das Biegewerkzeug 7, 8 punktgenau zur Auflagestelle 12 transportiert und abgelegt. Durch in das Biegewerkzeug 7, 8 integrierte Vakuumkanäle 27, bzw. Vakuumzonen, wird die erwärmte Kunststoffplatte 10 sauber und lagegenau auf dem Biegewerkzeug 7, 8 gehalten.

Eine Anpressvorrichtung, welche aus drehbare gelagerten Anpresswalzen 6 besteht, drückt die erwärmte Kunststoffplatte 10 gegen die Formflächen der Biegewerkzeuge 7, 8. Das angelegte Vakuum in den Biegebereichen 36 hält den Kunststoffbauteil 10 in Position und lässt diesen genau in der vorgegebenen Form abkühlen. Die Anpresswalzen 5 sind frei drehbar gelagert und können außerdem durch eine Bremsvorrichtung fixiert werden. Die Bahnkurve der Anpresswalzen 5 ist passend zum Biegewerkzeug 7, 8 gewählt und wird durch ein NC-Antriebssystem 6 realisiert. Das NC-Antriebssystem 6 hat den großen Vorteil, dass durch einfaches Austauschen der formrelevanten Bauteile ein anderes Formteil mit einfachen Mitteln generiert werden kann. Die Anpresswalze 5 ist weiters mit einer Ummantelung zur Schonung der Oberfläche des Kunststoffbauteils 10 versehen, wobei das Material der Ummantelung so gewählt wird, dass eine hohe Lebensdauer erreicht wird und dass eventuell durch die Elastizität der Ummantelung kleinere Fehler des Kunststoffbauteils 10 kompensiert werden können.

Das Verfahren und die Vorrichtung sind besonders für thermoplastische Kunststoffplatten geeignet. Weiters ergeben sich auch viele Möglichkeiten durch den Einsatz von koextrudierten Platten, die zum Beispiel aus folgenden Materialien bestehen: PS (Polystyrol), HIPS (High Impact Polystyrol), ABS (Acryl Nitril-Butadien-Styrol), PMMA (Polymethyletheracrylat), PE (Polyethylen), EVOH (EthylenVinylalkohol-Copolymerisat), PP (Polypropylen, auch mit Füllstoffen). Die Plattenstärke kann beispielsweise zwischen 0,5 mm und 10 mm betragen.

Durch die erfindungsgemäße Vorrichtung und das Verfahren kann sichergestellt werden, dass der Kunststoffbauteil 10 auch bei relativ starken Umformungen nicht beschädigt wird, so dass die hohe Qualität der Oberflächen vollständig erhalten bleibt. Auf diese Weise ist es möglich, beispielsweise das Außengehäuse oder die Türen von Kühlgeräten vollständig aus Kunststoff herzustellen, so dass der Einsatz von Stahl weitgehend vermieden werden kann. Auf diese Weise hergestellte Kühlschränke sind recyclinggerecht, kostengünstig und ohne Lackeinsatz herstellbar und besitzen zudem ein geringeres Gewicht. Für das Design eröffnen sich zudem weitere Möglichkeiten.

## Patentansprüche

1. Verfahren zur Herstellung von Kunststoffbauteilen aus Kunststoffrohteilen (10), insbesondere von ein- oder mehrschichtigen Kunststoffplatten, mit folgenden Schritten:
- Bereitstellen eines Kunststoffrohteils (10);
- Erwärmen des Kunststoffrohteils (10) in vorbestimmten Biegebereichen (36) auf eine vorbestimmte Temperatur;
- Auflegen des Kunststoffrohteils (10) auf zumindest eine gekrümmte Formfläche (34) an einer Auflagestelle (35);
- Bewegen zumindest einer Anpresswalze (5) entlang einer vorgegebenen Bahnkurve entlang des Kunststoffrohteils (10), um diese in einem Biegevorgang an die Formfläche (34) zu pressen;
wobei der Kunststoffrohteil (10) während des Erwärmens und/oder während des Biegevorganges fixiert wird, **dadurch gekennzeichnet, dass** der Erwärmungsvorgang, der Biegevorgang und/oder der Abkühlvorgang temperaturgesteuert erfolgt, wobei vorzugsweise zumindest zwei Zonen des Biegebereiches (36) unterschiedlich erwärmt und/oder abgekühlt werden, und dass der Kunststoffrohteil (10) während des Erwärmens durch einen Niederhalter (14) an einer Heizeinrichtung (12) gehalten wird, wobei der erwärmte Kunststoffrohteil (10) durch den Niederhalter (14) zur Auflagestelle (35) transportiert wird.

2. Verfahren nach Anspruch 1, **dadurch gekennzeichnet, dass** der Kunststoffrohteil (10) während des gesamten Biegevorganges an der Formfläche (34) fixiert wird, wobei vorzugsweise der Kunststoffrohteil (10) an die Formfläche (34) gesaugt wird.

3. Verfahren nach Anspruch 1 oder 2, **dadurch gekennzeichnet, dass** der Kunststoffrohteil (10) nur in lokal beschränkten Biegebereichen (36) erwärmt wird.

4. Vorrichtung (1) zur Herstellung von Kunststoffbauteilen aus Kunststoffrohteilen (10), insbesondere von ein- oder mehrschichtigen Kunststoffplatten, mit zumindest einer Heizeinrichtung (12) zum Erwärmen des Kunststoffrohteils (10), mit zumindest einer Formfläche (34), die mindestens eine Auflagestelle (35) aufweist und mit zumindest einer Anpresswalze (5) zum Andrücken des Kunststoffrohteils (10) an die Formfläche (34), wobei die Anpresswalze (5) drehbar auf einem beweglichen Träger (37) gelagert ist, wobei der Kunststoffrohteil (10) während des Erwärmens und/oder während des Biegevorganges fixierbar ist, **dadurch gekennzeichnet, dass** die Heizeinrichtung (12) - in Richtung ihrer Längsachse (12a) betrachtet - zumindest zwei separat ansteuerbare Temperaturzonen aufweist, und dass der Kunststoffrohteil (10) während des Erwärmens durch zumindest einen verfahrbaren, vorzugsweise balkenförmigen Niederhalter (14) fixierbar ist, wobei der Niederhalter (14) den Kunststoffrohteil (10) gegen eine vorzugsweise balkenförmige stillstehende Heizeinrichtung (12) drückt und dass der Niederhalter (14) zumindest einen Sauggreifer (22) auf der dem Kunststoffrohteil (10) zugewandten Seite aufweist, welcher über zumindest einen Vakuumkanal (23) mit einem Saugluftanschluss (24) verbunden ist.

5. Vorrichtung (1) nach Anspruch 4, **dadurch gekennzeichnet, dass** die Längsachse (14a) des Niederhalters (14) und die Längsachse (12a) der Heizeinrichtung (12) im Wesentlichen parallel zueinander und parallel zu einem definierten Biegebereich (36) des Kunststoffrohteils (10) angeordnet sind.

6. Vorrichtung (1) nach Anspruch 4 oder 5, **dadurch gekennzeichnet, dass** der Niederhalter (14) und/oder die Heizeinrichtung (12) zumindest einen Kühlkanal (18; 21) aufweist.

7. Vorrichtung (1) nach einem der Ansprüche 4 bis 6, **dadurch gekennzeichnet, dass** die Heizeinrichtung (12) auf der dem Kunststoffrohteil (10) zugewandten Seite eine Schlitzblende (19) mit zumindest einem Schlitz (20) zur Erwärmung des Biegebereiches (36) des Kunststoffrohteils (10) aufweist, wobei vorzugsweise die Heizeinrichtung (12) zumindest ein kontaktloses Heizelement (16), vorzugsweise ein Keramik-Heizelement, einen Quarzstrahler oder einen Infrarotstrahler, aufweist und/oder dass der Niederhalter (14) auf der dem Kunststoffrohteil (10) zugewandten Seite zumindest eine schlitzförmige Öffnung oder eine Nut (33) aufweist, wobei die schlitzförmige Öffnung oder Nut (33) gegenüber dem Schlitz (20) der Heizeinrichtung (12) angeordnet ist und wobei vorzugsweise die Breite (b₁, b₂) der schlitzförmigen Öffnung oder Nut (33) der Breite (B₁, B₂) des Schlitzes (20) der Heizeinrichtung (12) entspricht.

8. Vorrichtung (1) nach einem der Ansprüche 4 bis 7, **dadurch gekennzeichnet, dass** zumindest ein die Formfläche (34) ausbildendes Biegewerkzeug (7, 8) zumindest eine Heiz- und/oder Kühleinrichtung aufweist, wobei vorzugsweise das Biegewerkzeug (7, 8) zumindest zwei separat erwärm- oder abkühlbare Temperaturzonen (7a, 7b, 7c, 7d, 7e, 7f, 7g, 7h, 7i) aufweist.

9. Vorrichtung (1) nach einem der Ansprüche 4 bis 8, **dadurch gekennzeichnet, dass** das Biegewerkzeug (7, 8) zur Fixierung des Kunststoffrohteils (10) zumindest einen in der Formfläche (34) mündenden Vakuumkanal (27) aufweist, welcher mit einem Unterdruckanschluss (29) verbindbar ist.

10. Vorrichtung (1) nach einem der Ansprüche 4 bis 9, **dadurch gekennzeichnet, dass** das Biegewerkzeug (7, 8), vorzugsweise mehrere Formwerkzeuge (7, 8) in einer Werkzeugeinheit (4) angeordnet ist bzw. sind und/oder dass die Heizeinrichtunig (12), vorzugsweise zumindest zwei Heizeinrichtungen (12), in einem Heizmodul (3) angeordnet sind und/oder dass der Niederhalter, vorzugsweise zumindest zwei Niederhalter (14), in einer verfahrbaren Niederhalteinheit (13) angeordnet sind.

11. Vorrichtung (1) nach einem der Ansprüche 4 bis 10, **dadurch gekennzeichnet, dass** die Anpresswalzen (5) durch ein mehrachsige Antriebssystem (6), vorzugsweise ein NC-Antriebssystem bewegbar sind, wobei vorzugsweise das Antriebssystem (6) samt Anpresswalzen (5) und Werkzeugeinheit (4) in einem Biegemodul (2) angeordnet sind.

## Claims

1. A method for producing plastic components from raw plastic parts (10), especially single-layer or multi-layer plastic plates, comprising the following steps:
- providing a raw plastic part (10);
- heating the raw plastic part (10) in predetermined bending areas (36) to a predetermined temperature;
- placing the raw plastic part (10) on at least one curved shaping area (34) at a bearing point (35);
- moving at least one pressure roller (5) along a predetermined trajectory along the raw plastic part (10) in order to press the same in one bending process against the shaping area (34);
with the raw plastic part (10) being fixed during the heating and/or during the bending process, **characterised in that** the heating process, the bending process and/or the cooling process occurs in a temperature-controlled manner, with preferably at least two zones of the bending area (36) being heated and/or cooled differently, and the raw plastic part (10) is held during heating by a retainer (14) against a heating device (12), with the heated raw plastic part (10) being conveyed by the retainer (14) to the bearing point (35).

2. A method according to claim 1, **characterised in that** the raw plastic part (10) is fixed during the entire bending process on the shaping area (34), with preferably the raw plastic part (10) being sucked towards the shaping area (34).

3. A method according to claim 1 or 2, **characterised in that** the raw plastic part (10) is only heated in locally limited bending areas (36).

4. An apparatus (1) for producing plastic components from raw plastic parts (10), especially single-layer or multi-layer plastic plates, comprising at least one heating device (12) for heating the raw plastic part (10), at least one shaping surface (34) having at least one bearing point (35) and at least one pressure roller (5) for pressing the raw plastic part (10) against the shaping surface (34), with the pressure roller (5) being held in a rotatable manner on a movable support (37), with the raw plastic part (10) being fixable during the heating and/or during the bending process, **characterised in that** the heating device (12), when seen in the direction of its longitudinal axis (12a), comprises at least two separately controllable temperature zones, and the raw plastic part (10) can be fixed during the heating by at least one movable, preferably beam-like retainer (14), with the retainer (14) pressing the raw plastic part (10) against a preferably beam-like stationary heating device (12), and the retainer (14) comprises at least one suction gripper (22) on the side facing the raw plastic part (10), which gripper is connected with a suction-air connection (24) via at least one suction duct (23).

5. An apparatus (1) according to claim 4, **characterised in that** the longitudinal axis (14a) of the retainer (14) and the longitudinal axis (12a) of the heating device (12) are arranged substantially parallel with respect to each other and parallel to a defined bending area (36) of the raw plastic part (10).

6. An apparatus according to claim 4 or 5, **characterised in that** the retainer (14) and/or the heating device (12) comprises at least one cooling duct (18; 21).

7. An apparatus (1) according to one of the claims 4 to 6, **characterised in that** on the side facing the raw plastic part (10) the heating device (12) comprises a slotted baffle (19) with at least one slot (20) for heating the bending area (36) of the raw plastic part (10), with the heating device (12) comprising at least one contactless heating element (16), preferably a ceramic heating element, a quartz radiator or an infrared radiator, and/or that the retainer (14) comprises at least one slot-like opening or a groove (33) on the side facing the raw plastic part (10), with the slot-like opening or groove (33) being arranged opposite the slot (20) of the heating device (12) and with preferably the width (b₁, b₂) of the slot-like opening or groove (33) corresponding to the width (B₁, B₂) of the slot (20) of the heating device (12).

8. An apparatus (1) according to one of the claims 4 to 7, **characterised in that** at least one bending die (7, 8) forming the shaping surface (34) comprises at least one heating and/or cooling device, with preferably the bending die (7, 8) comprising at least two separately heatable or coolable temperature zones (7a, 7b, 7c, 7d, 7e, 7f, 7g, 7h, 7i).

9. An apparatus (1) according to one of the claims 4 to 8, **characterised in that** the bending die (7, 8), in order to fix the raw plastic part (10), comprises at least one vacuum duct (27) opening into the shaping surface (34), which duct can be connected to a vacuum connection (29).

10. An apparatus (1) according to one of the claims 4 to 9, **characterised in that** the bending die (7, 8), preferably several shaping dies (7, 8), are arranged in one die unit (4), and/or that the heating device (12), preferably at least two heating devices (12), are arranged in a heating module (3), and/or that the retainer, preferably at least two retainers (14), are arranged in a movable retainer unit (13).

11. An apparatus (1) according to one of the claims 4 to 10, **characterised in that** the pressure rollers (5) can be moved by a multi-axle drive system (6), preferably an NC drive system, with preferably the drive system (6) plus pressure rollers (5) and die unit (4) being arranged in a bending module (2).

## Revendications

1. Procédé de fabrication de composants en matière plastique à partir de pièces brutes en matière plastique (10), notamment de plaques de matière plastique à une ou plusieurs couches, comprenant les étapes suivantes :
- fourniture d'une pièce brute en matière plastique (10),
- chauffage de la pièce brute en matière plastique (10) dans des zones de cintrage (36) déterminées, à une température prédéfinie,
- application de la pièce brute de matière plastique (10) sur au moins une surface de formage (34), courbe au niveau d'une zone d'appui (35),
- déplacement d'au moins un cylindre de pression (5) le long d'une trajectoire courbe prédéfinie le long de la pièce brute en matière plastique (10) pour presser celle-ci contre la surface de formage (34) au cours d'une opération de cintrage,
procédé selon lequel
la pièce brute en matière plastique (10) est bloquée pendant son chauffage et/ ou pendant la phase de cintrage,
procédé **caractérisé en ce que**
l'opération de chauffage, l'opération de cintrage et/ou l'opération de refroidissement se font à une température commandée,
et de préférence, au moins deux parties de la zone de cintrage (36) sont chauffées différemment et/ou sont refroidies différemment et la pièce brute en matière plastique (10) est tenue au cours du chauffage contre une installation de chauffage (12) par un serre-flan (14),
la pièce en matière plastique brute (10), réchauffée étant transportée par le serre-flan (14) jusqu'à la zone d'appui (35).

2. Procédé selon la revendication 1,
**caractérisé en ce que**
la pièce brute en matière plastique (10) est bloquée contre la surface de formage (34) au cours de toute l'opération de cintrage,
la pièce brute de matière plastique (10) étant de préférence, aspirée contre la surface de formage (34).

3. Procédé selon les revendications 1 ou 2,
**caractérisé en ce que**
la pièce brute en matière plastique (10) n'est chauffée que dans des zones de cintrage (36) localement limitées.

4. Dispositif (1) pour la fabrication de composants en matière plastique à partir de pièces brutes en matière plastique (10), notamment de plaques en matière plastique à une ou plusieurs couches, ayant au moins une installation de chauffage (12) pour chauffer la pièce brute en matière plastique (10), une surface de formage (34) ayant au moins une zone d'appui (35) et au moins un cylindre de pression (5) pour presser la pièce brute de matière plastique (10) contre la surface de formage (34),
- le cylindre de pression (5) étant monté à rotation sur un support mobile (37), et
- la pièce brute en matière plastique (10) étant bloquée au cours du chauffage et/ ou pendant l'opération de cintrage,
**caractérisé en ce que**
l'installation de chauffage (12), vue dans la direction de son axe longitudinal (12a), comporte au moins deux zones de température commandées séparément et
la pièce brute en matière plastique (10) est bloquée pendant sont chauffage par au moins un serre-flan (14) mobile, de préférence en forme de poutre,
le serre-flan (14) poussant la pièce brute en matière plastique (10) contre l'installation de chauffage (12), fixe, de préférence en forme de poutre et
le serre-flan (14) comporte au moins une tête de préhension à ventouses (22) sur le côté tourné vers la pièce brute en matière plastique (10), reliées à une aspiration d'air (24) par au moins un canal de vide (23).

5. Dispositif (1) selon la revendication 4,
**caractérisé en ce que**
l'axe longitudinal (14a) du serre-flan (14) et l'axe longitudinal (12a) de l'installation de chauffage (12) sont pratiquement parallèles entre eux et parallèles à une zone de ceintrage (36), définie de la pièce brute en matière plastique (10).

6. Dispositif (1) selon la revendication 4 ou 5,
**caractérisé en ce que**
le serre-flan (14) et/ou l'installation de chauffage (12) comportent au moins un canal de refroidissement (18, 21).

7. Dispositif (1) selon l'une des revendications 4 à 6,
**caractérisé en ce que**
l'installation de chauffage (12) comporte sur son côté tourné vers la pièce en matière plastique brute (10), un écran à fente(s) (19) ayant au moins une fente (20) pour chauffer la zone de cintrage (36) de la pièce brute en matière plastique (10),
- de préférence, l'installation de chauffage (12) comporte au moins un élément chauffant (16) sans contact, de préférence un élément chauffant en céramique, un radiateur à quartz ou un radiateur infrarouge et/ ou
- le serre-flan (14) comporte sur son côté tourné vers la pièce brute en matière plastique (10), au moins une ouverture en forme de fente ou rainure (33),
- l'ouverture en forme de fente ou rainure (33) est tournée vers la fente (20) de l'installation de chauffage (12) et
- de préférence, la largeur (b1, b2) de l'ouverture en forme de fente ou rainure (33) correspond à la largeur (B1, B2) de la fente (20) de l'installation de chauffage (12).

8. Dispositif (1) selon l'une des revendications 4 à 7,
**caractérisé en ce qu'**
un outil de cintrage (7, 8) constituant la surface de formage (34) comporte au moins une installation de chauffage et/ou de refroidissement, l'outil de cintrage (7, 8) ayant de préférence au moins deux zones de température (7a, 7b, 7c, 7d, 7e, 7f, 7g, 7h, 7i) susceptibles d'être chauffées ou refroidies séparément.

9. Dispositif (1) selon l'une des revendications 4 à 8,
**caractérisé en ce que**
l'outil de cintrage (7, 8) comporte au moins un canal de vide (27) débouchant dans la surface de formage (34) pour bloquer la pièce brute en matière plastique (10), ce canal étant relié à un canal de branchement de dépression (29).

10. Dispositif (1) selon l'une des revendications 4 à 9,
**caractérisé en ce que**
l'outil de cintrage (7, 8) comporte de préférence plusieurs outils de formage (7, 8) regroupés dans une unité d'outils (4) et/ou l'installation de chauffage (12) comporte de préférence au moins deux installations de chauffage (12) dans un module (3) et un serre-flan, de préférence au moins deux serre-flan (14) sont portés par une unité de serre-flan (13), mobile.

11. Dispositif (1) selon l'une des revendications 4 à 10,
**caractérisé en ce que**
les cylindres de pression (5) sont déplacés par un système d'entraînement (6) à plusieurs axes de préférence, un système d'entraînement à commande numérique (NC), et de préférence, le système d'entraînement (6) avec les cylindres de pression (5) et l'unité porte-outils (4) sont installés dans un module de cintrage (2).
